# EUROPEAN PATENT APPLICATION

(11) **EP 3 930 127 A1**
(43) Date of publication of application: **29.12.2021**
(21) Application number: 21178280.0
(22) Date of filing: 08.06.2021
(51) Int. Cl.: H02G 1/12

(54) **COAXIAL CABLE OUTER JACKET STRIPPING AND TAPERING MACHINE**

(30) Priority: 23.06.2020 TR 202009771
(71) Applicant: Aselsan Elektronik Sanayi ve Ticaret Anonim Sirketi, 06200 Ankara (TR)
(72) Inventor: ZORAL O LU, MUSTAFA KEMAL, Ankara (TR)
(74) Representative: Yamankaradeniz, Kemal

(57) **Abstract**

The present invention relates to a machine stripping the outer jacket and tapering the live ends of coaxial cables (1) that have copper-plated outer insulation and used in radio frequency (RF).

## Description

### Technical Field of the Invention

The present invention relates to a machine that strips the outer part and tapers the end sections of the cables.

The present invention particularly relates to the machine that strips the outer jacket and tapers the live ends of coaxial cables that have copper-plated outer insulation and used in radio frequency (RF).

### Background of the Invention

The coaxial cables that are used in dwellings, commercial and industrial facilities in data transmission are energy current transmission products covered with an insulating material and formed by placing one or more metallic conductors inside. Coaxial cable is a type of cable used in radio frequencies, is generally used in satellite connections.

Today, the ends of the cable are slightly stripped in order for the coaxial cables used in the systems to carry digital signals to be compatible with the connector. The cable end must be stripped in appropriate dimensions for the connector to be used so as to connect the cable to the relevant connector properly. Several conditions may be experienced as a consequence of the incompatible preparation of the cable for the connector. One of these conditions is that the inner conductor is short, in such a case there may be no contact between the cable and the connector. Other condition is that the insulating element is too long; in such a case, it will not be possible to tighten the connector sufficiently at the connection point and screening leakage will occur. This will cause noise to enter the system from outside.

In the state of the art, automatic machines or hand tools are used so as to strip the outer jacket of the cables. Furthermore, there are apparatuses for tapering the live ends of the cables.

Although coaxial cable outer jacket stripping machines in the state of the art perform the stripping process of the outer jacket of the cable, these machines have some negative aspects and difficulties during the process step. A regular replacement of the blades is required in existing machines, due to the rigid material of the outer jacket. In addition to this, compression spring or similar mechanisms are applied to the outer jacket of the cable due to the operating mechanism. Properties such as compression force and resilience in these mechanisms are lost due to mechanical fatigue when the service life is increased. The product is used by giving a different offset each time so as to eliminate deformation during cable opening. Furthermore, periodic calibration/verification is required. The machines used in the state of the art operate with multi-blade systems and the mentioned blades are generally imported. In addition to this, these machines are not able to taper the live ends of the cables. Furthermore, the bent cables can hit the machine since the machine area is large at the cable grip point.

One of the known applications is the stripping of the outer jacket of hand tools, cables, exposing the live end and/or using the same in tapering process. Some disadvantageous conditions are seen during use as well as manpower is required. The most important of these disadvantages is that tapering is not regular, it is misaligned on the axis due to the centering problem in live end tapering. Furthermore, it leads to qualified personnel requirement since the use of hand tools is not suitable for mass production, and it also requires manual skill.

As a result of the research made in the state of the art, document numbered US4096892A is encountered. Said document relates to a machine that automatically strips rigid or semi-rigid coaxial cable. The relevant document does not contain a specific stripping system that does not require calibration, and a structure that can both strip and taper the outer jacket with apparatus replacement.

As a result of the research made on the subject, document numbered US5713132A is encountered. Said document relates to tools for removing insulation surrounding the inner and outer conductors of a coaxial cable before a connector is attached. The invention particularly relates to coaxial cable cutting tools that can remove insulation from a large number of different types of coaxial cables using replaceable blade sets. The apparatus mentioned in the present document is not suitable for mass production and also requires manual skill. Besides, it does not contain a structure that will taper the cable end.

As a result, due to the abovementioned disadvantages and the insufficiency of the current solutions regarding the subject matter, a development is required to be made in the relevant technical field.

### Aim of the Invention

The invention aims to solve the abovementioned disadvantages by being inspired from the current conditions.

The main aim of the invention is to strip the outer jacket and to taper the live ends of coaxial cables that have copper-plated outer insulation and used in radio frequency (RF). Another aim of the invention is to eliminate the calibration requirement with its own specific system.

Another aim of the invention is to provide a structure that can both strip the outer jacket and taper the live end by providing the apparatus replacement.

Another aim of the invention is to provide a wider area of use in end opening because the cable clamping point is small, many cable geometries do not hit the machine.

In order to fulfill the abovementioned aims, the invention is a machine that strips the outer jacket and tapers the live ends of coaxial cables that have copper-plated outer insulation and used in radio frequency (RF) comprises
- a body on that the entire system is seated, and a main mechanical structure is connected,
- a compression mechanism that helps to keep the cable stable and has a one side is fixed and the other side is movable,
   characterized in comprising
- a cutting tool that strips the outer jacket of the cables and enables tapering with the replacement of apparatus when required,
- a cutting tool motor that gives the cutting tool the desired rotational motion,
- a tool holder that holds the conical tip enabling tapering process and cutting tips enabling the outer jacket stripping process and connects to the cutting tool motor,
- a motion motor that enables the cutting tool and the cutting tool motor to move forward and backward and to remove chips from the cable,
- a main control card that controls the motion structure of the system by changing the data such as the forward and backward speeds of the motors, cycle/minute etc.,
- a sensor that operates with the approach, optical or all-or-nothing logic, informs the system that the cable is centered and placed in the housing by the operator.

The structural and characteristic features of the present invention will be understood clearly by the following drawings and the detailed description made with reference to these drawings and therefore the evaluation shall be made by taking these figures and the detailed description into consideration.

### Figures Clarifying the Invention

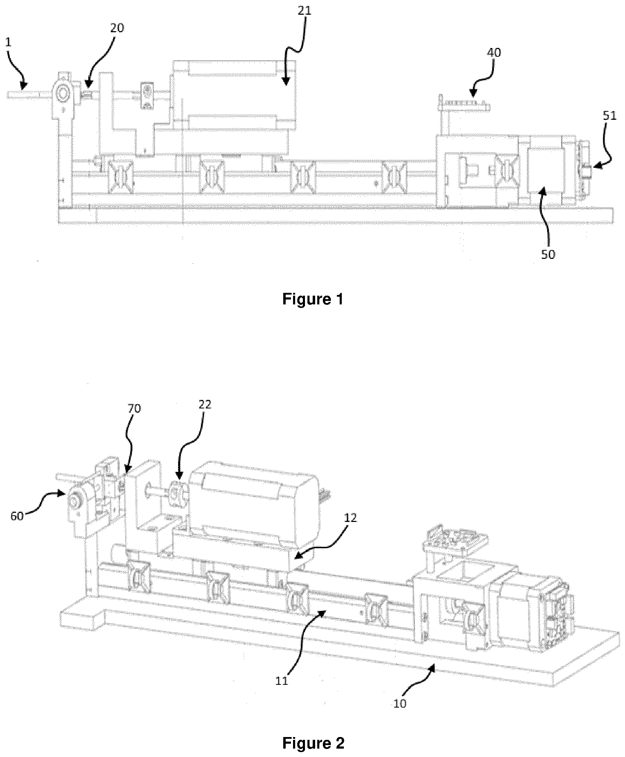

Figure 1 is the general view of the inventive machine.
Figure 2 is a perspective view of the inventive machine.

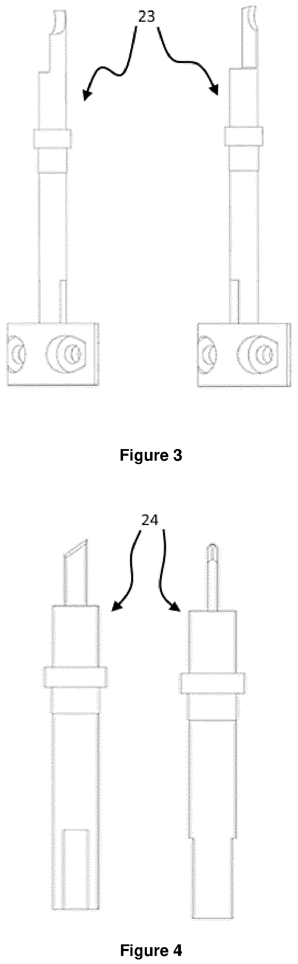

Figure 3 is the general view of the outer jacket stripping tool.
Figure 4 is the general view of the tapering tool.

### Reference Numbers

**1.** Cable
**10.** Body
**11.** Slide
**12.** Plate
**20.** Cutting tool
**21.** Cutting tool motor
**22.** Tool holder
**23.** Cutting tip
**24.** Conical tip
**40.** Main control card
**50.** Motion motor
**51.** Motion motor card
**60.** Compressing mechanism
**70.** Sensor

### Detailed Description of the Invention

In this detailed description, the preferred embodiments of the inventive machine are described by means of examples only for clarifying the subject matter.

The invention is a machine that strips the outer jacket and tapers the live ends of coaxial cables (1) that have copper-plated outer insulation and used in radio frequency (RF) comprises a body (10) on which the entire system is seated and a main mechanical structure is connected and a compression mechanism (60), one side of which is fixed and the other side is movable, which helps to keep the cable (1) stable, comprising cutting tool (20) that strips the outer jacket of the cables (1) and enables tapering with the replacement of apparatus when required and cutting tool motor (21) that gives the cutting tool (20) the desired rotational motion. In addition to these, it comprises a tool holder (22) that holds the conical tip (24) enabling tapering process and cutting tips (23) enabling the outer jacket stripping process and connects to the cutting tool motor (21) and motion motor (50) that enables the cutting tool (20) and the cutting tool motor (21) to move forward and backward and to remove chips from the cable (1). The invention further comprises; main control card (40) that controls the motion structure of the system by changing the data such as the forward and backward speeds of the motors, cycle/minute etc., and sensor (70) that operates with the approach, optical or all-or-nothing logic, informs the system that the cable (1) is centered and placed in the housing by the operator.

The inventive machine comprises a slide (11) that allows the machine to slide on the body (10) by giving the rotational motion of the motion motor (50) to the machine as a forward and backward motion and a motion motor card (51) that changes the forward and backward speeds of the motion motor (50) and enables it to be controlled. In addition to these, it comprises a plate (12) that keeps the cutting tool motor (21) fixed on the machine.

The cables mentioned in said invention are semi-rigid and semi-flex RF cables (1). The outer jackets of these cables are made of copper extruded material (pipe type). Such cables are cables that are easily brought to the final form and do not disrupt the signal transmission quality after the bending process and operate at high frequency. In accordance with the connector assembly instructions of the cables, all end opening processes must be performed properly and the live ends must be undamaged. Furthermore, the preformed shapes should be undamaged during the end opening process. The assembly process is completed by connecting the cables with proper end opening processes with the connector. There should not be any scratches or deformation on the live end in the end opening process. Furthermore, the live end's being conical creates a positive effect in different types of connectors. The tapered RF cable end is a subject that affects the RF signal performance since it increases the contact surface with the connector live end. Also, it ensures ease of assembly.

The inventive machine has a single blade system. While the blades cut by pressing the cable in the machines in the prior art, the classical chipping method is used in the inventive machine. The service life of the cutting tip (23) is longer than the cutting tools in existing automatic machines because it does not rotate around the cable (1) and moves according to the traditional chip removal logic. In addition to this, cutting tools of the prior art apply pressure to the cable by a spring, motor force or fastener and moves and cuts as it rotates around the cable. In the inventive machine, these elements do not exist. Since these elements do not break down, there is no need for offsetting or recalibration/verification depending on break down.

Tapering feature that is not available in automatic machines can be provided in the inventive machine with different tool connected to the machine (different sets can be assembled with two headless setscrew and no further calibration is required). Tapering can be eccentric in hand-held applications as there is no machine-type tapering application in existing applications.

In the inventive machine, chamfering can be performed at the desired angle on the outer jacket, which is stripped by means of the cutting tip (23). This chamfer allows the cable to enter the connector by centering more easily. This property is presented as a claim in most of the prior art and this property is not seen in automatic machines.

The operating principle of the machine is as follows:
The coaxial cable (1) is located at the machine inlet by the operator. The information regarding the proper positioning of the cable (1) to the machine is transmitted to the system by means of the sensor (70). The system starts operation in this manner. The cable (1) is kept stable by means of the compression mechanism (60). The initiation signal of the motion is given to the cutting tool motor (21) by the main control card (40). Therefore, the cutting tool motor (21) begins to rotate at the desired cycle/minute. The length data of the end opening process entered by the operator is transmitted from the main control card (40) to the motion motor card (51). Subsequently, linear movement is ensured to the motion motor card (51) and the motion motor (50) in accordance with the relevant amount of rotation. The rotational motion of the motor (50) is transformed into linear motion by means of the slide (11). The cutting tool (20) is moved towards the cable (1) with this linear motion. The outer jacket of the cable (1) is striped according to the moved height. When the outer jacket is stripped, the cable outer jacket is chamfered at the starting point by means of the cutting tool (20). The live end of the cable is tapered in case the conical end (24) is connected to the cutting tool (20). The conical tip (24) and the cutting tip (23), which is an outer jacket stripping tool, can be easily replaced by means of the tool holder (22). The process can be carried out after selecting the tip according to the process to be performed by loosening the screws on the tool holder (22). A recalibration or verification is not required because the dimensions of the cutting tip (23) and the conical tip (24) are the same.

## Claims

1. A machine for striping the outer jacket and tapering the live ends of coaxial cables (1) that have copper-plated outer insulation and used in radio frequency (RF), comprises
• a body (10) the entire system is placed thereon, and the main mechanical structure is connected,
• a compression mechanism (60) helping to keep the cable (1) stable and that has fixed one side and movable other side,
**characterized in comprising**
• a cutting tool (20) striping the outer jacket of the cables and tapering with the replacement of apparatus when required,
• a cutting tool motor (21) forming the cutting tool (20) to the desired rotational motion,
• a tool holder (22) holding a conical tip (24) which enables the tapering process and cutting tips (23) which enables the outer jacket stripping process, connecting the cutting tips (23) and the conical tip (24) to the cutting tool motor (21),
• a main control card (40) controlling the motion structure of the system by changing the data such as the forward and backward speeds of the motors, cycle/minute etc.,
• a sensor (70) operating with the logic of approach, optical or all-or-nothing, informing the system that the cable (1) is centered and placed in the housing by the operator.

2. The machine according to claim 1, **characterized in** comprising a motion motor (50) removing chips from the cable (1) by enabling the cutting tool (20) and the cutting tool motor (21) to move forward and backward.

3. The machine according to claim 1 or 2, **characterized in** comprising a slide (11) allowing the machine to slide on the body (10) by giving the rotational motion of the motion motor (50) to the machine as a forward and backward motion.

4. The machine according to claim 2, **characterized in** comprising a motion motor card (51) changing the forward and backward speeds of the motion motor (50) and enables controlling.

5. The machine according to claim 1, **characterized in** comprising a plate (12) keeping the cutting tool motor (21) fixed on the machine.
